(19) **Europäisches Patentamt / European Patent Office / Office européen des brevets**

(11) **EP 1 897 098 B1**

(12) **EUROPEAN PATENT SPECIFICATION**

(45) Date of publication and mention
of the grant of the patent:
**16.05.2012 Bulletin 2012/20**

(21) Application number: **06758858.2**

(22) Date of filing: **28.04.2006**

(51) Int Cl.:
*H01B 7/28* (2006.01)      *C07F 7/18* (2006.01)

(86) International application number:
**PCT/US2006/016644**

(87) International publication number:
**WO 2006/119196 (09.11.2006 Gazette 2006/45)**

(54) **ELECTRICAL CABLE RESTORATION FLUID**

ELEKTRISCHE KABELRESTAURATIONSFLÜSSIGKEIT

FLUIDE DE RESTAURATION DE CABLE ELECTRIQUE

(84) Designated Contracting States:
**AT BE BG CH CY CZ DE DK EE ES FI FR GB GR HU IE IS IT LI LT LU LV MC NL PL PT RO SE SI SK TR**

(30) Priority: **29.04.2005 US 676267 P**

(43) Date of publication of application:
**12.03.2008 Bulletin 2008/11**

(73) Proprietors:
• **Dow Corning Corporation**
  **Auburn, MI 48686 (US)**
• **UTILX CORPORATION**
  **Kent, WA 98032 (US)**

(72) Inventors:
• **COOK, Julie L.**
  **Turner, Michigan 48765 (US)**
• **GOUDIE, James L.**
  **Midland, Michigan 48642 (US)**

• **KOSAL, Diane M.**
  **Midland, Michigan 48624 (US)**
• **STARK-KASLEY, Lori**
  **Midland, Michigan 48642 (US)**
• **CHATTERTON, Wayne J.**
  **Midland, Michigan 48642 (US)**
• **JAIYEOLA, Ganiyu**
  **Caledonia, MI 49316 (US)**
• **STAGI, William R.**
  **Seattle, Washington 98146 (US)**
• **STEELE, James A.**
  **Seattle, Washington 98121 (US)**

(74) Representative: **Neilson, Martin Mark**
**Urquhart-Dykes & Lord LLP**
**Tower North Central**
**Merrion Way**
**Leeds LS2 8PA (GB)**

(56) References cited:
**EP-A- 0 274 101      EP-A- 0 621 608**
**US-A- 4 961 961**

**Description**

The present invention relates to a method for preventing aluminum corrosion in restored electrical distribution cable. More particularly, the instant invention relates to a method of contacting the interior of the cable with a fluid mixture which comprises (A) a liquid anti-treeing agent and (B) a water-reactive compound or a water-reactive anti-treeing agent to obtain a fluid mixture with a boiling point ≥ 90°C.

A major problem associated with buried electrical distribution cable is its tendency over time to fail due to the progressive degradation of its insulation. The degradation of polymeric insulations in many cases can be correlated to the development and growth of water tree structures in the insulation material. These water tree structures have been studied extensively. Their development is known to occur when water present inside the insulation material is exposed to an electric field. Water trees grow in size over time usually spanning on the order of years. As they grow, they reduce the overall efficacy of the insulation. Eventually electrical stresses across the tree's branchlike structures discharge which leads to insulation failure. This failure mode is known to be a leading cause of failure in buried, aged, solid dielectric cables.

It is known that water treeing can be arrested to a degree by the incorporation of an anti-tree additive (e.g., various organosilanes) directly into the insulation composition of the cable at time of manufacture. Unfortunately, this approach only addresses the issue of how to inhibit the formation of trees and the associated deterioration of insulation integrity. It will, however, be recognized that a vast network of underground cable is already in place wherein the cable either has not been treated according to one of these procedures or it has degenerated significantly despite such efforts and is therefore subject to premature failure.

As a partial answer to industry's desire to extend the useful life of existing underground cables, it has been found that certain tree retardants, such as polydimethylsiloxane fluid or aromatic alkoxysilanes, can be introduced into the cable's interior to partially restore the insulation performance. Under certain cable conditions, like high cable temperatures, the restoration fluid can boil at the liquid to solid interface. Some alkoxysilanes, such as trimethylmethoxysilane, have low boiling points, which may allow the restoration fluid to boil at normal operating temperatures of the cable. This boiling action can disrupt and wear away the protective aluminum oxide layer on the aluminum strands in the cable. After this oxide layer is disrupted, corrosion agents can react with the aluminum to produce other corrosion products. The boiling action will continue to wash away the corrosion products leading to continued corrosion of ihe aluminum. This corrosion may, at times, lead to cable failure.

In lab simulated tests, it has now been found that if boiling does not occur, corrosion does not occur either. It has now been found that when boiling point of the fluid is ≥ 90°C (above the operating temperature of the cable) then boiling is prevented at the liquid to solid interface and corrosion of the aluminum is minimized.

The instant invention therefore relates to a method for enhancing the dielectric properties of an electrical cable having a central stranded conductor encased in a polymeric insulation, the cable having an interstitial void space in the region of the conductor, the method comprising supplying the interstitial void space of the cable with a fluid mixture comprising

(A) a liquid anti-treeing agent having a boiling point > 90°C; and

(B) a compound different from (A) and having a diffusion coefficient of at least about 1x10$^{-7}$ cm$^2$/sec at 50°C in low-density polyethylene, the compound (B) selected from a water-reactive compound or a water-reactive anti-treeing agent;
said method characterised in that:

wherein (A) is present in about 95 parts by weight and (B) is present in about 5 parts by weight, based on 100 parts by weight of the fluid mixture to obtain a fluid mixture with a boiling point ≥ 90°C.

The in-service cable is typically of the type used in underground residential distribution and typically comprises a central core of a stranded copper or aluminum conductor encased in polymeric insulation. As is well known in the art, there is usually also a semi-conducting polymeric conductor shield positioned between the conductor and insulation as well as a semi-conducting insulation shield covering the insulation, the latter being ordinarily wrapped with a wire or metal foil grounding strip and, optionally, encased in an outer polymeric protective jacket. The insulation is preferably a polyolefin polymer, such as polyethylene or a copolymer of polyethylene and propylene, or vinyl acetate. As used herein, the term "in-service" refers to a cable that has been under electrical load and exposed to the elements for an extended period. In such a cable, the electrical integrity of the cable insulation has generally deteriorated to some extent due to the formation of water trees, as described above. It is also contemplated, however, that the instant method can be used for new cable as well as an in-service cable. Typically, after the cable has been in operation for an extended period, for example 7 to 15 years, the fluid mixture of the invention is introduced into the interstitial void space of the conductor.

The method of introducing the fluid mixture into the interstitial void space of the conductor is carried out in the manner described in above and as cited in U.S. Pat. No. 4,766,011 to Vincent et al., which is hereby incorporated by reference. Briefly, the method comprises filling the interstitial void space of the conductor with the fluid mixture of the present invention. The fluid mixture is allowed to remain in the cable interior for an appropriate period while it diffuses into the cable's polymeric insulation to fill the water trees, thereby enhancing the dielectric strength of the cable. The time required for the treatment is a function of such variables as cable size (insulation thickness), water content of the cable components and treatment temperature, less time being required when the cable has a thinner insulation and operates at a higher current load. Those skilled in the art will readily determine optimum conditions for a particular situation based on the following disclosure and routine experimentation.

The method may further comprise a step wherein water present in the conductor interstitial volume may be removed or its quantity reduced prior to the introduction of the fluid mixture. Typically, this is done by flushing a desiccant gas or liquid, such as air, nitrogen, ethanol or isopropanol, through the cable interior to either physically push out the moisture or mix with the water to facilitate physical removal. For example, a high velocity dry air stream may be used to blow out bulk water that has accumulated in the void space.

Anti-treeing agent (A) can be selected from compounds known to prevent water trees in polymeric insulation when compounded into the insulation, and mixtures thereof. Such compounds as aromatic ketones (e.g., acetophenone), fatty alcohols (e.g., dodecanol) and organoalkoxysilanes, illustrate the range of suitable anti-treeing agents, which can be employed as component (A). It is preferred that component (A) be capable of reacting with water to polymerize in the cable insulation after diffusing therethrough. This tends to increase the lifetime of the treatment and precludes the need for perpetual maintenance of the dielectric enhancing fluid. Many such systems have been described in the patent literature and the interested reader is referred to U.S. Pat. No. 4,144,202 to Ashcraft et al., U.S. Pat. No. 4,212,756 to Ashcraft et al., U.S. Pat. No. 4,299,713 to Maringet et al., U.S. Pat. No. 4,332,957 to Braus et al., U.S. Pat. No. 4,400,429 to Barlow et al., U.S. Pat. No. 4,608,306 to Vincent and U.S. Pat. No. 4,840,983 to Vincent, among others.

Typically, the anti-treeing agent is of the type described in above cited U.S. Pat. No. 4,766,011 to Vincent et al. This compound is represented by the general formula $(RO)_x R^1_y SiAr_{(4-x-y)}$ wherein R is an alkyl radical having 1 to 6 carbon atoms, $R^1$ is an alkyl radical having 1 to 6 carbon atoms, Ar is an aromatic group selected from the group consisting of phenyl and benzyl radicals, x is 1, 2 or 3, y is 0, 1 or 2 and $(x+y) \leq 3$. These silanes may be exemplified by, but not limited to, phenyltrimethoxysilane, diphenyldimethoxysilane, phenylmethyldiethoxysilane and phenylmethyldimethoxysilane. An illustrative diffusion rate for the anti-treeing agent ranges from 5.6-5.9 x $10^{-8}$.

Compound (B) is selected from water-reactive compounds or water-reactive anti-treeing agents. The water-reactive compound (B) of the present invention is a low molecular weight liquid which is different from component (A), which reacts with water and which has a diffusion coefficient of at least about $1 \times 10^{-7}$ cm$^2$/sec at 50°C in low-density polyethylene. The diffusion coefficient indicates the diffusion rate of the component. When the diffusion of this component is considerably slower than that stipulated, not only is the treatment time extended, but the aforementioned asymmetry of the fluid in the cable is increased for a reasonable treatment time, for example 30 to 120 days.

Component (B) may be selected from trialkylalkoxysilanes, dialkyldialkoxysilanes or organoborates. Component (B) can also be an orthoester having the general structure $R^2 C(OCH_3)_3$, where $R^2$ is selected from hydrogen or a methyl radical. Alternatively, component (B) can be an enol ether of the general structure $R^3 R^4 C=C(OR^5)R^6$, where $R^3$, $R^4$ and $R^6$ are independently selected from hydrogen or alkyl radicals having 1 to 3 carbon atoms and $R^5$ is -SiR$^7$3, in which $R^7$ is an alkyl radical having 1 to 2 carbon atoms. When the above fluids are allowed to diffuse into polymeric insulation materials, such as the polyethylene, it has been found that water tree formation in the treated materials is retarded relative to a control or when the fluid does not react with water. Examples of suitable water reactive compounds, and their respective diffusion coefficients (D) at 50°C in the low density polyethylene (wherein Me denotes a methyl radical, Et denotes an ethyl radical, and OAc denotes an acetoxy group), include:

$Me_3Si(OMe)$ (D=2.4x10$^{-7}$), $(MeO)_3CH$ (D=1.7x10$^{-7}$), $(MeO)_3CCH_3$ (D=1.0x10$^{-7}$) $(MeO)_3B$ (D=2.7x10$^{-7}$), $Me_2Si(OMe)_2$ (D=1.4x10$^{-7}$), $Me_2Si(OEt)_2$ (D=1.0x10$^{-7}$), $CH_2=C(Me)-OSiMe_3$ (D=1.5x10$^{-7}$).

From the above description, one skilled in the art will readily appreciate that there will be certain combinations of component (A) and component (B) that will not be suitable for the instant process due to the chemical interaction there between. For example, when component (A) is an alkoxysilane, component (B) cannot be a borate since the latter would react with the silane to form products that would retard diffusion of component (A) in the insulation. Routine experimentation can be applied to determine whether a potentially reactive combination of (A) and (B) is suitable.

The amount of compound (B) that is in the fluid mixture is an amount such that the boiling point of the fluid mixture is not < 90°C. For example, if too much of component (B) is added, since component (B) typically has a boiling point of < 90°C and the boiling point of (A) is >90°C, the boiling point of the mixture would be reduced below 90°C. However, a sufficient amount of (B) is necessary to improve the diffusivity of the fluid mixture. Typically, the weight percent ratio of component (A) to (B) is 99.9/0.1 to 90.1/9.9. According to the present invention, component (A) is present in about 95 parts by weight and component (B) is present in about 5 parts by weight, based on 100 parts by weight of the fluid mixture. Additionally, due to the presence of component (B), the fluid mixture of and used in the method of the present invention has a diffusion rate ≥ than that of the liquid anti-treeing agent (A), such as phenylmethyldimethoxysilane.

When components (A) and (B) are selected from compounds which can form oligomers upon reaction with water, it is preferred that these components have a low water equivalent weight, this being defined as the weight of the compound required to react with one mole of water. This preference is suggested by the observation that the oligomers have significantly slower diffusion relative to the monomers and the intent is to limit the extent of oligomerization in the conductor region so that more of the fluid can penetrate the insulation as quickly as possible and react with the water therein.

The following examples are included to demonstrate preferred embodiments of the invention. It should be appreciated by those of skill in the art that the techniques disclosed in the examples, which follow, represent techniques discovered by the inventor to function well in the practice of the invention, and thus can be considered to constitute preferred modes for its practice. However, those of skill in the art should, in light of the present disclosure, appreciate that many changes can be made in the specific embodiments which are disclosed and still obtain a like or similar result without departing from the spirit and scope of the invention.

EXAMPLES

**Example 1: Blends of Phenylmethyldimethoxysilane (PhMe) and Trimethylmethoxysilane (TMM)**

PhMe and TMM were blended in ratios listed in Table 1. PhMe contained a titanate as a hydrolysis catalyst and a blue dye. A corrosion agent was added to the silane blend in some cases to introduce a simulation of corrosion on the aluminum strands tested in these Examples (see below). The corrosion agents used in the Examples can include salts, bases above a pH of 8.5, acids below a pH of 4, water, alcohols, and the like so long as the corrosion agent is able to introduce the simulation of the corrosion on the aluminum strands. The blends were evaluated according to the experimental procedures below. Formulations C1-1 through C1-4 are comparative examples. Additionally, formulations 1-3 and 1-4 are included by way of example only and do not fall within the scope of the present invention.

*Table 1: Formulation of PhMe and TMM with and without Corrosion Agent*

| Example # | Wt% PhMe | Wt % TMM | Wt% Corrosion Agent |
|---|---|---|---|
| C1-1 | 70 | 30 | 0 |
| C1-2 | 66.2 | 28.3 | 5.5 |
| C1-3 | 100 | 0 | 0 |
| C14 | 94.5 | 0 | 5.5 |
| 1-1 | 95 | 5 | 0 |
| 1-2 | 89.8 | 4.7 | 5.5 |
| 1-3 | 90 | 10 | 0 |
| 1-4 | 85.0 | 9.5 | 5.5 |

**Example 2: Blends of Phenylmethyldimethoxysilane (PhMe) and Trimethylethoxysilane (TME)**

PhMe and TME were blended in ratios listed in Table 2. PhMe contained a titanate as a hydrolysis catalyst and a blue dye. A corrosion agent was added to the silane blend in some cases to simulate an ample presence of a corrosion agent. Formulations 2-3 and 2-4 are included by way of example only and do not fall within the scope of the present invention. The blends were evaluated according to the experimental procedures below.

*Table 2: Formulation of PhMe and TME with and without Corrosion Agent*

| Example # | Wt% PhMe | Wt % TME | Wt% Corrosion Agent |
|---|---|---|---|
| 2-1 | 95 | 5 | 0 |
| 2-2 | 89.8 | 4.7 | 5.5 |
| 2-3 | 90 | 10 | 0 |

(continued)

| Example # | Wt% PhMe | Wt % TME | Wt% Corrosion Agent |
|---|---|---|---|
| 2-4 | 85.0 | 9.5 | 5.5 |

## Experimental Procedure:

Boiling Point:

## Boiling Point:

The silane blends, with and without the corrosion agent, were heated to boiling and the temperature was measured. Repeatability typically is within 3°C.

## Boiling Point Design of Experiments (DOE):

D-Optimal Mixture Design was set up with 18 experiments. The corrosion agent was varied from 0-8% by weight, TMM or TME was varied from 0 to 30% by weight, and PhMe was varied from 62 to 100% by weight. The formulations were blended together in a bottle and shaken. The boiling point was then run. Design Expert Software was used to analyze the data and an equation was obtained. At this point, the boiling point can be calculated for any formulation between these % by weight ranges. Four formulations were then chosen, and boiling point tests were run to validate the equation to predict boiling point. The predicted boiling points were within experimental error of actual boiling points.

**Table 3: Boiling Point Results of Formulations with and without Corrosion Agent**

| Example # | Boiling Point, °C |
|---|---|
| C1-1 | 75 |
| C1-2 | 62 |
| C1-3 | 183 |
| C1-4 | 77 |
| 1-1 | 134* |
| 1-2 | 76* |
| 1-3 | 108 |
| 1-4 | 72* |
| 2-1 | 143* |
| 2-2 | 75* |
| 2-3 | 121* |
| 2-4 | 72 |
| **\* Calculated boiling points from DOE.** | |

## Corrosion Testing:

Benz ovens were used to heat the formulations containing the silane and the corrosion agent and expose the formulations to the aluminum. The Benz oven uses 275 ml test tubes that fit into the slots in the oven. Water- cooled condensers were placed on top of the tubes to limit the evaporation of its contents. The formulations were loaded into the tubes. Thirty aluminum strands that were about 2 inches long (taken from an aged German electrical cable) were weighed on an analytical balance and placed in the tube. The tube was placed in the oven and heated to 70 °C for 72, 240 or 500 hours or to 90 °C for 72, 240, or 500 hours. The testing was done in triplicate. After the required time, the tubes were removed. The aluminum strands were separated from the fluid and corrosion products. Before weighing, the aluminum strands were rinsed with isopropanol and then acetone.

**Table 4: Aluminum Corrosion Results at 70°C:**

| Example | Avg. mg of corrosion/day - 72 hr (standard deviation) | Avg. mg of corrosion/day - 240hr (standard deviation) | Avg. mg of corrosion/day - 500hr (standard deviation) |
|---------|------------------------------------------------------|-------------------------------------------------------|-------------------------------------------------------|
| C1-1 | NA | 1(4) | NA |
| C1-2 | NA | 105(8) | 102(5) |
| C1-4 | NA | 8 (8) | 1(0) |
| 1-2 | 9 (0.2) | NA | 1(0.1) |
| 1-4 | 7(1.6) | NA | 1(0.0) |
| NA = not available. | | | |

Note that 72 hr corrosion rates are typically higher than 240 hr or 500 hr corrosion rates cine the corrosion agent is depleted with time as the corrosion product is formed.

**Table 5: Aluminum Corrosion Results at 90°C:**

| Example | Avg. mg of corrosion/day - 72 hr (standard deviation) | Avg. mg of corrosion/day - 240hr (standard deviation) | Avg. mg of corrosion/day - 500hr (standard deviation) |
|---------|------------------------------------------------------|-------------------------------------------------------|-------------------------------------------------------|
| C1-4 | 467 (2.5) | 195 (19.2) | 105 (0.4) |
| 1-2 | 618(199.6) | 229 (49.4) | 105 (0.5) |

**Diffusion Testing:**

Solubility and Permeability are determined experimentally by standard procedures known in the art. These values are used to calculate the Diffusion Coefficient by the equation below:

**Diffusivity Coefficient Calculation**

$$\text{Diffusivity (cm}^2\text{/sec)= (Permeability (g/cm}^2\text{sec) x thickness (cm))/solubility (g/cm}^3\text{)}$$

**Table 6: Diffusion of the Silane Blends**

| Example # | Diffusion Coefficient, cm$^2$/sec |
|-----------|-----------------------------------|
| C1-3 | 5.6E-08 |
| 1-1 | 6.1E-08 |
| 1-3 | 7.3E-08 |

**Summary of Results:**

The major difference between C1-4 and C1-2 is the presence of TMM, which reduces the boiling point, so boiling takes place during the lab corrosion test. Boiling of the fluid will cause cavitation, which can lead to corrosion. With TMM levels such that boiling does not occur (C1-4, 1-2, 1-4 at 70°C), no corrosion takes place. However, as seen with C1-4 and 1-2, as the temperature increases above the boiling point of the fluid, boiling and thus cavitation will occur.
Improving the diffusion into the cable insulation will eliminate the water trees more rapidly. When TMM is present in the silane blend, the diffusion is improved. Even at 5 wt% TMM (1-1), the diffusion of the fluid into the low-density polyethylene insulation is quicker than at 100% PhMe (C1-3).
Thus, reducing the level of TMM over the prior art (C1-1) raises the boiling point of the silane blend (1-1) while maintaining a diffusion rate higher than 100% PhMe (C1-3).

**Claims**

1. A fluid mixture comprising:

   (A) a liquid anti-treeing agent having a boiling point $\geq$ 90°C; and
   (B) a compound different from (A) and having a diffusion coefficient of at least about $1 \times 10^{-7}$ cm$^2$/sec at 50°C in low-density polyethylene, the compound (B) selected from a water-reactive compound or a water-reactive anti-treeing agent;
   said mixture **characterised in that**:

   wherein (A) is present in about 95 parts by weight and (B) is present in about 5 parts by weight, based on 100 parts by weight of the fluid mixture to obtain a fluid mixture with a boiling point $\geq$ 90°C.

2. The mixture as claimed in claim 1 wherein the fluid mixture has a diffusion coefficient $\geq$ than that of phenylmethyl-dimethoxysilane.

3. The mixture as claimed in claim 1 wherein the compound (B) is selected from the group of trialkylalkoxysilanes, diaikyldialkoxysilanes, and mixtures thereof.

4. The mixture as claimed in claim 1 wherein the liquid anti-treeing agent (A) is an organoalkoxysilane selected from the group of phenyltrimethoxysilane, diphenyldimethoxysilane, phenylmethyldiethoxysilane, and phenylmethyldimethoxysilane, and mixtures thereof.

5. The mixture as claimed in claim 1 wherein the liquid anti-treeing agent (A) is selected from the group of aromatic ketones, fatty alcohols, organoalkoxysilanes, and mixtures thereof.

6. A method of contacting the interior of a cable with a fluid mixture wherein the cable has a central stranded conductor encased in a polymeric insulation and has an interstitial void space in a region of the conductor, said method comprising supplying the interstitial void space with a fluid mixture comprising:

   (A) a liquid anti-treeing agent having a boiling point $\geq$ 90°C; and
   (B) a compound different from (A) and having a diffusion coefficient of at least about $1 \times 10^{-7}$ cm$^2$/sec at 50°C in low-density polyethylene, the compound (B) selected from a water-reactive compound or a water-reactive anti-treeing agent;
   said method **characterised in that**:

   wherein (A) is present in about 95 parts by weight and (B) is present in about 5 parts by weight, based on 100 parts by weight of the fluid mixture to obtain a fluid mixture with a boiling point $\geq$ 90°C.

7. The method as claimed in claim 7 wherein the fluid mixture has a diffusion coefficient $\geq$ than that of phenylmethyl-dimethoxysilane,

8. The method as claimed in claim 7 wherein the compound (B) is selected from the group of trialkylalkoxysilanes, dialkyldialkoxysilanes, and mixtures thereof.

9. The method as claimed in claim 7 wherein the liquid anti-treeing agent (A) is an organoalkoxysilane selected from the group of phenytrimethoxysilane, diphenyldimethoxysilane, phenylmethyldiethoxysilane, and phenylmethyldimethoxysilane, and mixtures thereof.

10. The method as claimed in claim 7 wherein the liquid anti-treeing agent (A) is selected from the group of aromatic ketones, fatty alcohols, organoalkoxysilanes, and mixtures thereof.

11. The mixture as claimed in claim 1 wherein the compound (B) has a boiling point of < 90°C.

12. The method as claimed in claim 7 wherein the compound (B) has a boiling point of < 90°C.

**Patentansprüche**

1. Flüssigkeitsmischung, umfassend:

    (A) ein flüssiges Mittel gegen Bäumchenbildung mit einem Siedepunkt > 90 °C; und
    (B) eine von (A) verschiedene Verbindung mit einem Diffusionskoeffizienten von wenigstens ungefähr $1 \times 10^{-7}$ $cm^2$/s bei 50 °C in Polyethylen niedriger Dichte, wobei die Verbindung (B) aus einer mit Wasser reaktionsfähigen Verbindung oder einem mit Wasser reaktionsfähigen Mittel gegen Bäumchenbildung ausgewählt ist;

    wobei die Mischung **dadurch gekennzeichnet ist, dass**:

    (A) in einer Menge von ungefähr 95 Gewichtsteilen vorhanden ist und (B) in einer Menge von ungefähr 5 Gewichtsteilen vorhanden ist, bezogen auf 100 Gewichtsteile der Flüssigkeitsmischung, um eine Flüssigkeitsmischung mit einem Siedepunkt ≥ 90 °C zu erhalten.

2. Mischung nach Anspruch 1, wobei die Flüssigkeitsmischung einen Diffusionskoeffizienten ≥ dem Diffusionskoeffizienten von Phenylmethyldimethoxysilan aufweist.

3. Mischung nach Anspruch 1, wobei die Verbindung (B) ausgewählt ist aus der Gruppe von Trialkylalkoxysilanen, Dialkyldialkoxysilanen und Mischungen davon.

4. Mischung nach Anspruch 1, wobei das flüssige Mittel gegen Bäumchenbildung (A) ein Organoalkoxysilan, ausgewählt aus der Gruppe von Phenyltrimethoxysilan, Diphenyldimethoxysilan, Phenylmethyldiethoxysilan und Phenylmethyldimethoxysilan und Mischungen davon, ist.

5. Mischung nach Anspruch 1, wobei das flüssige Mittel gegen Bäumchenbildung (A) ausgewählt ist aus der Gruppe von aromatischen Ketonen, Fettalkoholen, Organoalkoxysilanen und Mischungen davon.

6. Verfahren zum Inkontaktbringen des Inneren eines Kabels mit einer Flüssigkeitsmischung, wobei das Kabel einen zentralen mehrdrähtigen Leiter, der in einer polymeren Isolierung eingeschlossen ist, aufweist und einen interstitiellen Leerraum in einer Region des Leiters aufweist, wobei das Verfahren das Zuführen einer Flüssigkeitsmischung zu dem interstitiellen Leerraum umfasst, welche umfasst:

    (A) ein flüssiges Mittel gegen Bäumchenbildung mit einem Siedepunkt > 90 °C; und
    (B) eine Verbindung, die von (A) verschieden ist und einen Diffusionskoeffizienten von wenigstens ungefähr $1 \times 10^{-7}$ $cm^2$/s bei 50 °C in Polyethylen niedriger Dichte aufweist, wobei die Verbindung (B) aus einer mit Wasser reaktionsfähigen Verbindung oder einem mit Wasser reaktionsfähigen Mittel gegen Bäumchenbildung ausgewählt ist;

    wobei das Verfahren **dadurch gekennzeichnet ist, dass**:

    (A) in einer Menge von ungefähr 95 Gewichtsteilen vorhanden ist und (B) in einer Menge von ungefähr 5 Gewichtsteilen vorhanden ist, bezogen auf 100 Gewichtsteile der Flüssigkeitsmischung, um eine Flüssigkeitsmischung mit einem Siedepunkt ≥ 90 °C zu erhalten.

7. Verfahren nach Anspruch 7, wobei die Flüssigkeitsmischung einen Diffusionskoeffizienten ≥ dem Diffusionskoeffizienten von Phenylmethyldimethoxysilan aufweist.

8. Verfahren nach Anspruch 7, wobei die Verbindung (B) ausgewählt ist aus der Gruppe von Trialkylalkoxysilanen, Dialkyldialkoxysilanen und Mischungen davon.

9. Verfahren nach Anspruch 7, wobei das flüssige Mittel gegen Bäumchenbildung (A) ein Organoalkoxysilan, ausgewählt aus der Gruppe von Phenyltrimethoxysilan, Diphenyldimethoxysilan, Phenylmethyldiethoxysilan und Phenylmethyldimethoxysilan und Mischungen davon, ist.

10. Verfahren nach Anspruch 7, wobei das flüssige Mittel gegen Bäumchenbildung (A) ausgewählt ist aus der Gruppe von aromatischen Ketonen, Fettalkoholen, Organoalkoxysilanen und Mischungen davon.

**11.** Mischung nach Anspruch 1, wobei die Verbindung (B) einen Siedepunkt von < 90 °C aufweist.

**12.** Verfahren nach Anspruch 7, wobei die Verbindung (B) einen Siedepunkt von < 90 °C aufweist.

**Revendications**

**1.** Mélange fluide comprenant :

(A) un agent résistant à l'arborescence liquide ayant un point d'ébullition supérieur à 90°C ; et
(B) un composé différent de (A) et ayant un coefficient de diffusion d'au moins environ $1\times10^{-7}$ cm$^2$/s à 50°C dans du polyéthylène de faible densité, le composé (B) étant sélectionné parmi un composé réactif à l'eau et un agent résistant à l'arborescence réactif à l'eau ;

ledit mélange étant **caractérisé en ce que** :

(A) est présent dans environ 95 parties en poids et (B) est présent dans environ 5 parties en poids, sur la base de 100 parties en poids du mélange fluide pour obtenir un mélange fluide avec un point d'ébullition supérieur ou égal à 90°C.

**2.** Mélange selon la revendication 1, dans lequel le mélange fluide a un coefficient de diffusion supérieur ou égal à celui du phényleméthylediméthoxysilane.

**3.** Mélange selon la revendication 1, dans lequel le composé (B) est sélectionné dans le groupe se composant de trialkylalkoxysilanes, dialkyldialkoxysilanes et de mélanges de ceux-ci.

**4.** Mélange selon la revendication 1, dans lequel l'agent résistant à l'arborescence liquide (A) est un organoalkoxysilane sélectionné dans le groupe se composant de phényletriméthoxysilane, diphénylediéthoxysilane, phényleméthylediméthoxysilane, phényleméthylediméthoxysilane, et de mélanges de ceux-ci.

**5.** Mélange selon la revendication 1, dans lequel l'agent résistant à l'arborescence liquide (A) est sélectionné dans le groupe se composant de cétones aromatiques, alcools gras, organoalkoxysilanes et de mélanges de ceux-ci.

**6.** Procédé de mise en contact de l'intérieur d'un câble avec un mélange fluide dans lequel le câble a un conducteur torsadé central encastré dans une isolation polymérique et a un espace interstitiel vide dans une région du conducteur, ledit procédé comprenant la fourniture dans l'espace interstitiel vide d'un mélange fluide comprenant :

(A) un agent résistant à l'arborescence liquide ayant un point d'ébullition supérieur à 90°C ; et
(B) un composé différent de (A) et ayant un coefficient de diffusion d'au moins environ $1\times10^{-7}$ cm$^2$/s à 50°C dans du polyéthylène de faible densité, le composé (B) étant sélectionné parmi un composé réactif à l'eau et un agent résistant à l'arborescence réactif à l'eau ;

ledit procédé étant **caractérisé en ce que** :

(A) est présent dans environ 95 parties en poids et (B) est présent dans environ 5 parties en poids, sur la base de 100 parties en poids du mélange fluide pour obtenir un mélange fluide avec un point d'ébullition supérieur ou égal à 90°C.

**7.** Procédé selon la revendication 6, dans lequel le mélange fluide a un coefficient de diffusion supérieur ou égal à celui du phényleméthylediméthoxysilane.

**8.** Procédé selon la revendication 6, dans lequel le composé (B) est sélectionné dans le groupe se composant de trialkylalkoxysilanes, dialkyldialkoxysilanes et de mélanges de ceux-ci.

**9.** Procédé selon la revendication 6, dans lequel l'agent résistant à l'arborescence liquide (A) est un organoalkoxysilane sélectionné dans le groupe se composant de phényletriméthoxysilane, diphénylediéthoxysilane, phényleméthylediméthoxysilane, phényleméthylediméthoxysilane, et de mélanges de ceux-ci.

**10.** Procédé selon la revendication 6, dans lequel l'agent résistant à l'arborescence liquide (A) est sélectionné dans le groupe se composant de cétones aromatiques, alcools gras, organoalkoxysilanes et de mélanges de ceux-ci.

**11.** Mélange selon la revendication 1, dans lequel le composé (B) a un point d'ébullition inférieur à 90°C.

**12.** Procédé selon la revendication 7, dans lequel le composé (B) a un point d'ébullition inférieur à 90°C.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4766011 A, Vincent
- US 4144202 A, Ashcraft
- US 4212756 A, Ashcraft
- US 4299713 A, Maringet
- US 4332957 A, Braus
- US 4400429 A, Barlow
- US 4608306 A, Vincent
- US 4840983 A, Vincent